# EUROPEAN PATENT APPLICATION

(11) **EP 2 677 353 A1**
(43) Date of publication of application: **25.12.2013**
(21) Application number: 13184513.3
(22) Date of filing: 03.09.2009
(51) Int. Cl.: G02B 5/30, G02B 27/26

(54) **Stereoscopic display with polarization switching light source**

(30) Priority: 04.09.2008 US 94202 P; 07.03.2009 US 158352 P; 04.04.2009 US 166710 P; 21.05.2009 US 180178 P; 10.07.2009 US 224615 P; 10.07.2009 US 224824 P; 10.07.2009 US 224826 P; 10.07.2009 US 224829 P; 26.07.2009 US 228611 P; 07.08.2009 US 232037 P
(62) Divisional of application: 09752017.5
(71) Applicant: Turner, Ian, Salem, NH 03079 (US); Beck, William, Salem, NH 03079 (US); Coppeta, David, Salem, NH 03079 (US); Goodwin, Dave, Salem, NH 03079 (US); Zambuto, James, Salem, NH 03079 (US)
(72) Inventor: The designation of the inventor has not yet been filed
(74) Representative: Ponder, William Anthony John

(57) **Abstract**

A stereoscopic display system is provided, including a polarization-switching light source and a polarization-preserving projector which is illuminated by the polarization-switching light source. The polarization-preserving projector may form a left-eye digital image and a right-eye digital image, and the polarization state of the polarization switching light source may be changed in synchronization with an alternating projection of the left-eye digital image and the right-eye digital image.

## Description

### BACKGROUND OF THE INVENTION

Movie theaters have traditionally relied on projectors which use an arc-lamp as the source of light. This is a highly inefficient source for projecting an image onto a screen due to the extended size of the source, its low brightness, its broadband light, and the relatively short lifetime of the lamp itself. The cost of ownership to theater owners is large due to the frequent lamp changes required, the cost of electricity to operate the multi kilowatt lamps as well as the cooling required to keep the projector room at a normal operating temperature.

The move to digital cinema further reduces the efficiency of the lamp due to the requirement that the light needs to be separated into component red/green/blue bands to illuminate three modulation arrays in a uniform manner before recombining the beams for projection. Finally, 3-D digital cinema requires even more light as the projected image must be alternated between scenes for the left and right eyes which reduces the apparent brightness of the image on the screen.

Red, Green, Blue solid state lasers seem to be a viable solution to these problems while reducing the total cost of ownership. The pump lasers have very long rated lives, on the order of 20,000 hours, eliminating the need for lamp replacements. Semiconductor pump lasers have high electrical to optical efficiency meaning much less heat generation for a given output power as compared to arc lamps. The lasers are narrow-band which makes them easier to separate with little light loss. They also are much brighter sources which allows high optical throughput. Finally lasers are typically polarized which provides a big power advantage for some 3-D display technologies.

Solid-state lasers are not without problems, however. The typical high purity TEM00 Gaussian spatial mode is difficult to convert to a uniform source over the digital modulators. The narrow line width of a laser leads to speckle patterns over the viewed image which may lead to an unacceptable loss of image quality.

The optical designs of most digital image projectors use spatial light modulators (SLMs) to switch each pixel on and off in order to create a visual image. The SLMs may be reflective, such as liquid crystal on silicon (LCOS) devices and digital micromirror devices (DMDs), or may be transmissive such as liquid crystal display (LCD) panels.

Some of the commonly used components of laser optical systems include optical parametric oscillators (OPOs), and laser gain modules. OPOs may be used to generate multiple wavelengths of laser light from one pump laser beam. In the OPO, parametric amplification in a nonlinear crystal converts the pump laser wavelength into two more wavelengths of light, so an optical system with one pump laser and one OPO may produce at total of three wavelengths of visible light which are useful for applications such as full-color digital image projection. Laser gain modules are used to optically amplify laser light. A laser is used to pump a gain slab which is composed of a gain medium. Optical energy is transferred from the pump beam into a main beam of light which is also traveling through the gain slab.

Many other optical components are used in laser light sources, projectors, and optical systems in general. Commonly used abbreviations are as follows: ultra-high performance (UHP) lamp, polarizing beamsplitter (PBS), dichroic beamsplitter (DBS), second harmonic generation (SHG) unit, total-internal-reflection (TIR) prism, antireflection (AR) coating, neodymium-doped yttrium lithium fluoride (Nd:YLF) laser, neodymium-doped yttrium aluminum perovskite (Nd:YAP) laser, neodymium-doped yttrium lithium fluoride (Nd:YLF) laser, lithium triborate (LBO) crystal, short wave pass (SWP) filter, long wave pass (LWP) filter, subminiature A (SMA) connector, and light emitting diode (LED). Some of the concepts used in optics and their abbreviations are full-width half maximum (FWHM) bandwidth, angle of incidence (AOI), and ultraviolet (UV) light. The organizations and industry standards that apply include the Digital Cinema Initiative (DCI), the Commission Internationale de 1'Eclairage (CIE), and the International Telecommunication Union Radiocommunication (ITU-R) Recommenation 709 (Rec. 709).

Assembly and alignment of optical systems generally require that the optical components be placed in a desired position with high accuracy and that the components be held in that position throughout shipping and over the lifetime of the product. In manufacturing quantities of thousands or more, conventional optical assembly techniques do not provide cost-effective methods for assembling optical devices with high tolerances such as complex laser systems. Optical systems are typically assembled on the upper surface of a flat optical support structure. Each optical component of the optical system is aligned and attached to the flat optical support structure in its desired location.

A stereoscopic projector forms still or moving images that can be seen in three dimensions. Stereoscopic projection systems may be formed by using polarized light to form distinct images for the left eye and the right eye. These images simulate the images that would be seen in an actual three-dimensional scene. One polarization state is used for the left-eye image and the orthogonal polarization is used for the right-eye image. Glasses with polarizing filters are used to allow the left image to pass through to the left eye and the right image to pass through to the right eye, while blocking the left image from reaching the right eye, and blocking the right image from reaching the left eye. In other words, the image for the left eye is directed to the left eye and not to the right eye, whereas the image for the right eye is directed to the right eye and not to the left eye.

Instead of using polarized light, stereoscopic left and right images may be formed by using spectral selection, for example as described in US Patent No. 6,283,597, the complete disclosure of which is incorporated herein by reference. In the spectral selection method, first wavelength bands of red, green, and blue are passed to the left eye, and second wavelength bands of red, green, and blue are passed to the right eye. The first bands and second bands are distinct so that there is little or no overlap between the first and second bands.

Stereoscopic projection systems can be characterized as one of three basic types: (1) time-sequential projection that uses one SLM per color and alternately shows left eye images and right eye images in rapid sequence, (2) simultaneous projection that uses two SLMs per color, one for the left eye images and one for the right eye images, and (3) split image projection, where there is only one SLM per color, and the left and right eye images are formed simultaneously on separate parts or pixels of the single SLM.

In summary, the main problems facing digital image projectors are providing a bright image with a long operation lifetime, especially in the case of stereoscopic systems, and providing an alignment and assembly method that is feasible in full-scale production.

### SUMMARY OF THE INVENTION

The invention is defined in the appended claims, to which reference should be made.

In embodiments, in one aspect, a stereoscopic display system including a polarization-switching light source and a polarization-preserving projector which is illuminated by the polarization-switching light source.

Implementations may include one or more of the following features. The polarization-preserving projector may form a left-eye digital image and a right-eye digital image, and the polarization state of the polarization switching light source may be changed in synchronization with an alternating projection of the left-eye digital image and the right-eye digital image.

### BRIEF DESCRIPTION OF THE SEVERAL VIEWS OF THE DRAWING

FIG. 1 is a block diagram of an optical system which includes at least one laser light source, at least one coupler, and at least one set of SLMs;

FIG. 2 is a side view of a stereoscopic display system;

FIG. 3 is a side view of a stereoscopic display system with a polarization-switching light source;

FIG. 4 is a top view of a polarization-preserving projector;

FIG. 5 is a side view of a polarization-switching light source;

FIG. 6 is a front view of a rotating disk in a polarization switch; and

FIG. 7 is a flowchart of a method of stereoscopic projection.

### DETAILED DESCRIPTION

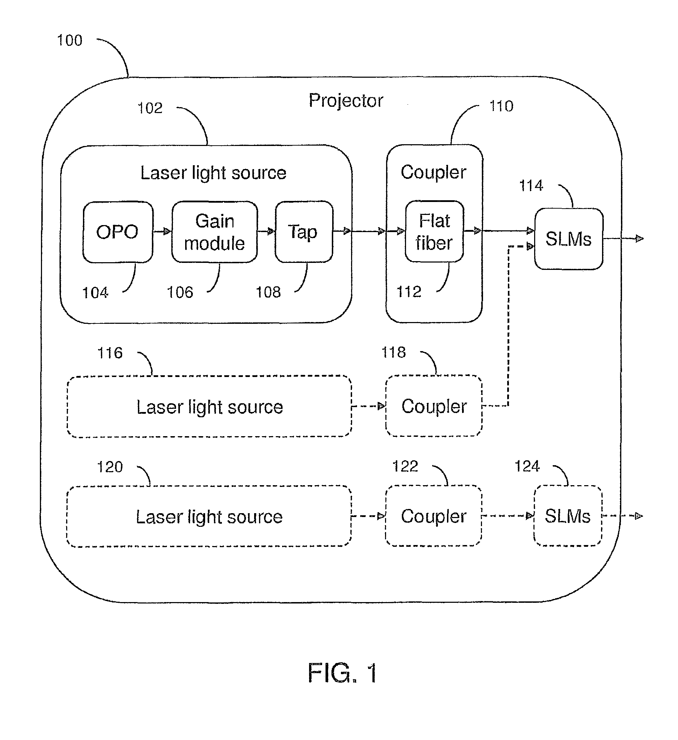

FIG. 1 is a block diagram of optical system 100, which has a number of novel parts that will be explained in the following description. First laser light source 102 may include OPO 104, laser gain module 106, and optical tap 108. Light is generated in OPO 104, passes through gain module 106, then through tap 108. The light then passes through first coupler 110 which includes flat-sided fiber 112, and then is processed by first SLMs 114. The light is then projected out of the optical system.

Second laser light source 116 may optionally be included for stereoscopic optical systems. The light from second laser light source 116 passes through second coupler 118 and then through first SLMs 114. The light is then projected out of the optical system. Alternatively, third laser light source 120 may optionally be included for stereoscopic optical systems. The light from third laser light source 120 passes through third coupler 122 and then through second SLMs 124. The light is then projected out of the optical system. Second laser light source 116 and third laser light source 120 may also include OPOs, gain modules, and optical taps (not shown).

In one aspect of the optical system shown in FIG. 1, a polarization-switching light source is used to form stereoscopic images by transmission through a polarization-preserving projection device. First laser light source 102 may be a polarization switching light source. First coupler 110 and first SLMs 114 may be polarization-preserving parts of a polarization-preserving projection device. Specific embodiments are described in the following paragraphs but are not meant to be limiting in any way.

First laser light source 102, second laser light source 116, or third laser light source 120 may be used to provide polarization-switched light. Polarized light may be used to project stereoscopic images when there are two orthogonal states of polarization. Orthogonal polarization states mean that two different orientation or types of polarizing filters are able to fully and distinctly separate the two polarization states without overlap. For example, linearly polarized light with an electric field vector oscillating in the horizontal direction is orthogonal to linearly polarized light with the electric field vector oscillating in the vertical direction. Similarly, linearly polarized light with an electric field vector oscillating in the - 45 degree direction is orthogonal to linearly polarized light with the electric field vector oscillating in the + 45 degree direction. Also, circularly polarized light with an electric field vector rotating in the clockwise (right-hand) direction is orthogonal to circularly polarized light with an electric field vector rotating in the counter-clockwise (left-hand) direction. If two states of non-orthogonal polarized light are used for stereoscopic viewing, the left eye image will leak into the right eye and vice versa to make ghosting artifacts which detract from the quality of the stereoscopic viewing experience.

Circularly polarized light is commonly used for stereoscopic projection because viewer head tilt does not significantly change the viewing experience. In contrast, when using linearly polarized light, severe ghosting artifacts will appear if the viewer's head is tilted too far. Also if the projector alone produces linearly polarized light, an external device may be placed in front of the projector to rapidly change the polarization between left-hand and right-hand circular polarization states. The external device may be an electrically-controlled liquid-crystal polarization rotator which is driven in synchronization with the projection of left-eye images and right-eye images.

By alternating the polarization states of left-eye images and right-eye images, stereoscopic content may be displayed and viewed. By rapidly alternating the polarization and images at faster than the flicker-fusion frequency, the appearance of moving images may be obtained.

Polarization preserving optical elements are used to transmit or reflect light without changing its polarization state. If two orthogonal polarization states are transmitted and reflected multiple times by the optical elements in a polarization preserving optical system, the two orthogonal polarization states are maintained in the original two orthogonal polarization states. Birefringence is the property of optical elements that describes the case where different directions have different indices of refraction. Birefringence generally leads to changes in polarization state, so low birefringence is usually desirable when designing polarization preserving optical systems.

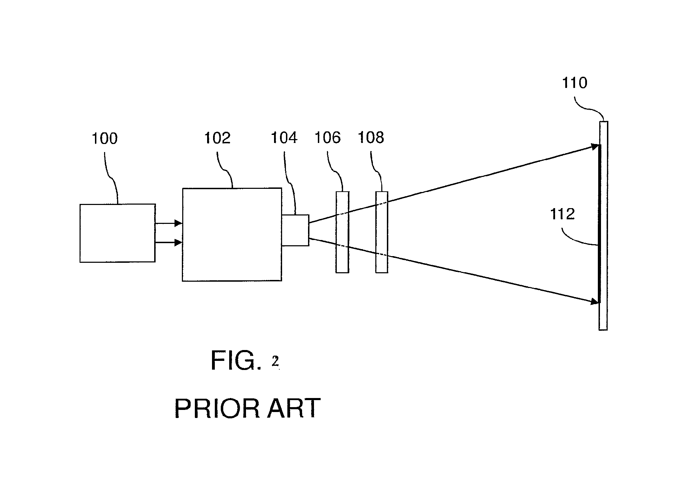

FIG. 2 shows a stereoscopic display system. Light source 1200 illuminates projector 1202. Projector 1202 projects an image with lens 1204. Projector 1202 and lens 1204 illuminate polarizing filter 1206 which polarizes the light into one polarization state. After polarizing filter 1206, the light passes into polarization switch 1208 which actively switches the light into two orthogonal polarization states in synchronization with projector 1202 displaying left and right eye images. The light then passes to polarization-preserving screen 1210 to form projected image 1212 on polarization-preserving screen 1210. In this system, the images for one eye are displayed with one orthogonal polarization state while the images for the other eye are displayed with the other orthogonal polarization state.

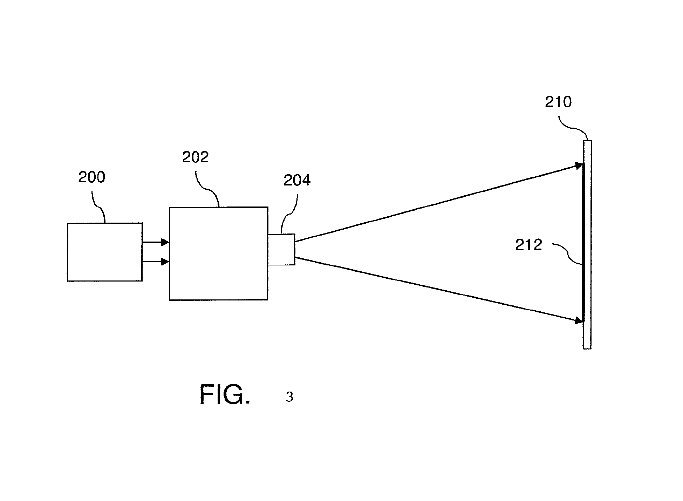

FIG. 3 shows a stereoscopic display system with a polarization-switching light source. Polarization-switching light source 1300 illuminates polarization-preserving projector 1302. Polarization-preserving projector 1302 projects an image with lens 1304. Polarization-switching light source 1300 switches the light into two orthogonal polarization states in synchronization with polarization-preserving projector 1302 displaying left and right eye images. Polarization-preserving projector 1302 and polarization-preserving lens 1304 illuminate polarization-preserving screen 1310 to form projected image 1312 on polarization-preserving screen 1310. As in the system of FIG. 2, the images for one eye are displayed with one orthogonal polarization state while the images for the other eye are displayed with the other orthogonal polarization state.

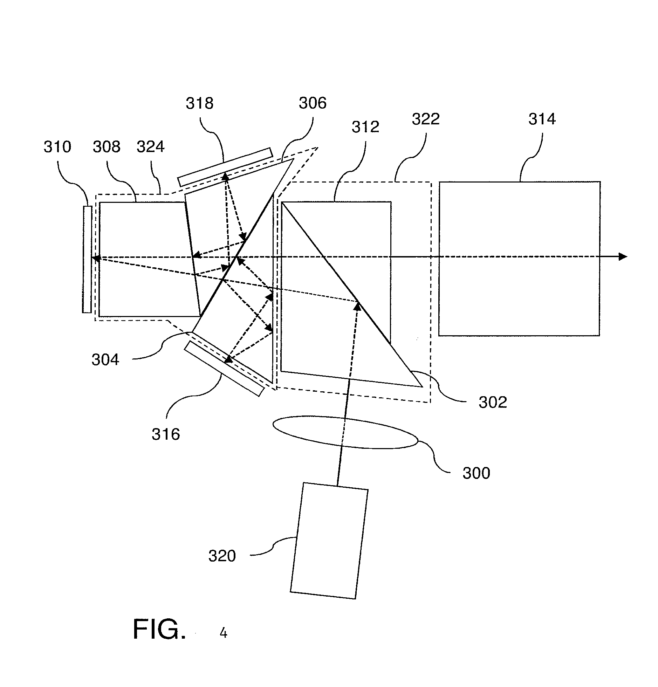

FIG. 4 shows the details of a polarization-preserving projector design. Light from polarization-switching light source 1420 enters lens system 1400. Lens system 1400 passes the light to TIR prism 1422 which consists of first TIR subprism 1402 and second TIR subprism 1412. The light enters first TIR subprism 1402 and reflects off the interface between first TIR subprism 1402 and second TIR subprism 1412. Then the light exits first TIR subprism 1402 and enters Philips prism 1424 which consists of first Philips subprism 1404, second Philips subprism 1406, and third Philips subprism 1408. The light enters first Philips subprism 1404 and passes to the interface between first Philips subprism 1404 and second Philips subprism 1406. At the interface between first Philips subprism 1404 and second Philips subprism 1406, the blue wavelength region of the light is reflected and the green and red wavelength regions of the light are transmitted. The blue light reflects off the surface of first Philips subprism 1404, then reflects from blue polarization-preserving SLM 1416, then reflects off the surface of first Philips subprism 1404, then reflects off the interface between first Philips subprism 1404 and second Philips subprism 1406 to rejoin the main beam to exit from Philips prism 1424. The green light passes into second Philips subprism 1406, then into third Philips subprism 1408, then reflects from green polarization-preserving SLM 1410, then rejoins the main beam to exit from Philips prism 1424. The red light reflects from the interface between second Philips subprism 1406 and third Philips subprism 1408, reflects off the surface of second Philips subprism 1406, then reflects from red polarization-preserving SLM 1418, then reflects from the interface of first Philips subprism 1404 and second Philips subprism 1406, then reflects from the interface of second Philips subprism 1406 and third Philips subprism 1408 to join the main beam and to exit from Philips prism 1424. The beam with all three colors modulated by polarization-preserving SLMs 1410, 1416, and 1418 passes again through TIR prism 1422 and then passes through polarization-preserving lens 1414 to form a projected digital image.

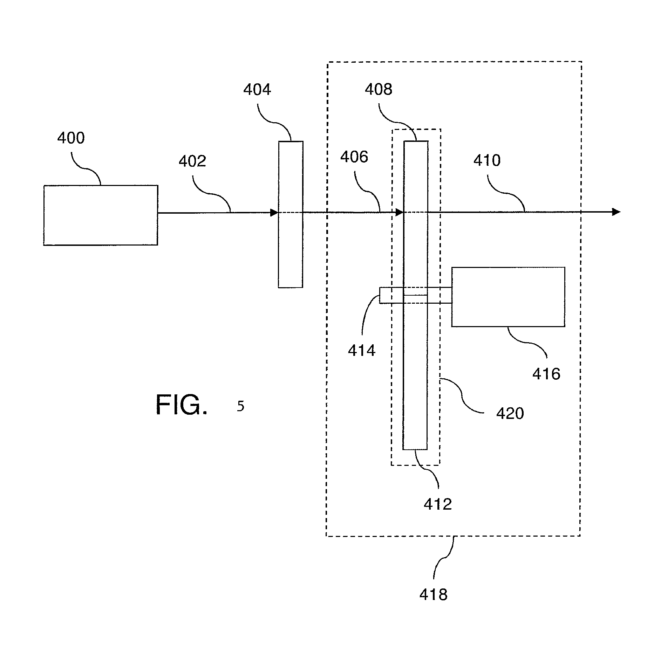

FIG. 5 shows a polarization-switching light source. Linearly polarized light source 1500 forms linearly polarized light beam 1502. Linearly polarized light beam 1502 passes through quarter wave plate 1504 which produces right-hand circularly polarized light beam 1506. Right-hand circularly polarized light beam 1506 passes through polarization switch 1518 which consists of dummy plate 1508, half wave plate 1512, rotor 1514, and motor 1516. Dummy plate 1508 and half wave plate 1512 form rotating disk 1520 which spins around rotor 1514 and is powered by motor 1516. Right-hand circularly polarized light beam 1506 passes alternately through dummy plate 1508 and half wave plate 1512 as they spin around rotor 1514. When right-hand circularly polarized light beam 1506 passes through dummy plate 1508, there is no effect on the polarization and beam 1510 is still right-hand circularly polarized. When right-hand circularly polarized light beam 1506 passes through plate 1512, the polarization of beam 1510 is changed to become left-hand circularly polarized. Polarization switch 1518 is synchronized with a projector to produce left-eye images polarized with one circular polarization state (e.g. right-hand) and right eye images with the orthogonal circular polarization state (e.g. left-hand). Alternately, quarter wave plate 1504 may be arranged to produce left-hand circularly polarized light in which case half wave plate 1512 changes the polarization to right-hand circularly polarized light.

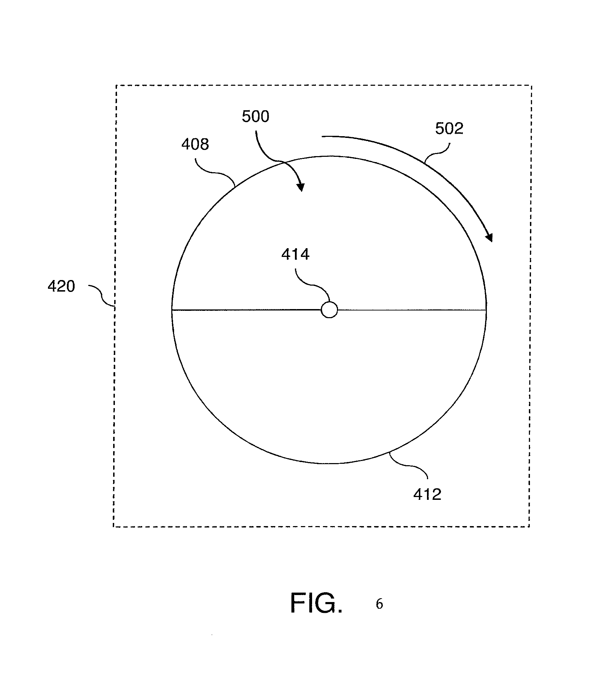

FIG. 6 shows a front view of rotating disk 1520 in polarization switch 1518. Disk 1520 rotates clockwise as shown by arrow 1602. Right-hand circularly polarized light beam 1506 passes through disk 1520 at the position shown by arrow 1600. Alternately, the disk may rotate counterclockwise.

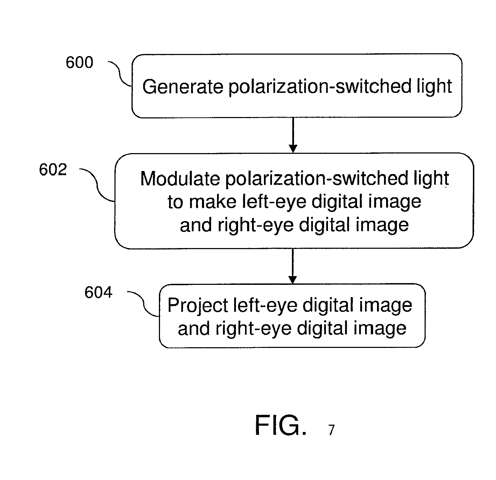

FIG. 7 shows a method of stereoscopic projection. In step 1700, polarization-switched light is generated. In step 1702, the polarization switched light is modulated to make a left-eye digital image and a right-eye digital image. In step 1704, the left-eye digital image and the right-eye digital image are projected for viewing. The modulation in step 1702 may be in synchronization with the polarization of the polarization-switched light so that the image for the left eye is polarized in one state, and the image for the right eye is polarized in the orthogonal state.

Polarization-switching light sources may be constructed by polarizing a naturally unpolarized source of light such as an arc lamp. In this case, the polarizer may be an absorptive polarizer such as polarizing film that absorbs the unwanted polarization of light. A more efficient system makes use of polarization recovery to repolarize the unwanted polarization state so that there is more light in the desired polarization state. Another method is to start with an inherently polarized light source such as a polarized laser that may be a solid state laser, diode pumped solid state laser, gas laser, or OPO.

A polarization switch may be used to actively change the polarization state of the polarization-switching light source. A polarization switch may be mechanical such as the one shown in FIG. 5, or it may be an electro-optical or magneto-optical device such as a polarization cell based on the Pockels effect, Faraday effect, Kerr effect, or any other polarization-controlling optical element. The polarization switch may be built into the light source or it may be a separate element immediately after the light source which operates on light emitted by the light source in which case the light source and polarization switch together are considered to be a polarization-switching light source. When utilized for stereoscopic projection, the polarization switch should not spend significant time switching between states because the time between states may contribute to ghosting.

Wave plates may be also used to change polarization states of light. Achromatic wave plates make the same change in polarization across all wavelengths in a certain design region. When held at the proper rotational orientation relative to the beam direction of propagation, quarter wave plates make a 90 degree phase difference in the horizontal and vertical electric field vectors such that linearly polarized light is converted to circularly polarized light and vice versa. Half wave plates make a 180 degree phase difference such that linearly or circularly polarized light is converted to the orthogonal polarization state. Wave plates may be made of birefringent crystals cut as a specific orientation, or they may be made from birefringent plastic film with specific retardation in each axis. Achromatic wave plates may be made from a stack of multiple layers of plastic film at specific orientations such as those manufactured by ColorLink Inc. (Boulder, Colorado).

A polarization-preserving projector may be constructed by using optical components that are themselves polarization preserving. If all the lenses, prisms, SLMs, mirrors and other optical components of the projector are polarization preserving, the overall projector will be polarization preserving. Optical components are polarization preserving if they cause an acceptably low level of polarization changes for two orthogonal polarization states. Optical effects which can cause polarization changes include scattering, retardation, and polarization splitting. Scattering is an inherently depolarizing process. Retardation may occur from randomly distributed birefringence regions in plastic optical elements. Polarization splitting is caused at optical surfaces by differences in reflected or transmitted intensities of light that are of two different polarization states. Optical surfaces with a very high transmission or reflection throughout the wavelengths of operation generally have minimal polarization splitting. Certain AR coatings and all total internal reflection surfaces have minimal polarization splitting as long as the wavelengths and angles fall within their designed range of operation. Also, most coatings and materials have minimal polarization splitting when the AOI is low. The AOI for a ray of light incident on a surface is defined as the angle between the incident ray of light and the perpendicular to the surface. If the AOI is zero degrees, mirrors and transmissive surfaces have zero polarization splitting. If the AOI is 5 degrees, aluminum mirrors have approximately 0.1 % polarization splitting and typical AR coatings have approximately 0.01 %. If the AOI is 10 degrees, aluminum mirrors have approximately 0.2% polarization splitting and typical AR coatings have approximately 0.05% in the photopically significant middle of the visible region of light which extends from approximately 500 nm to approximately 600 nm.

Optical elements constructed of high quality optical glass are generally inherently polarization preserving in the bulk of the material because the index of refraction is uniform throughout. Plastic optical elements, on the other hand, sometimes have retardation which leads to depolarizing or non-uniform polarization if the index of refraction varies throughout the plastic material.

Polarization preserving SLMs may be designed using DMDs such as those available from Texas Instruments (Dallas, Texas). Since the mirrors of a DMD are coated with a highly-reflecting material such as aluminum, the polarization splitting is low at small angles of operation which are typically 5 to 10 degrees AOI. If lower polarization splitting is desired, higher reflection coatings or other coatings with reduced polarization splitting may be used on the mirrors. In addition, AR coatings on the DMD window may help reduce polarization splitting of the DMD.

Glass TIR prisms may be designed to be polarization preserving. The interface between the two subprisms of a TIR prism has an air gap with AR coatings on both of the surfaces that form the air gap. In the example of FIG. 4, the AOI at the point where the beam passes through the air gap and AR coatings is 36 degrees. The transmission through the AR-coated surfaces of the TIR prism may have low polarization splitting if the AR-coating is designed to minimize polarization splitting. Between 500 and 600 nm, the polarization splitting may be less than 0.2%.

Philips prisms may be used for color splitting and recombining as described in detail in US Patent No. 3,659,918 the complete disclosure of which is incorporated herein by reference. Philips prisms with low polarization splitting may be constructed as described in "Design of Non-Polarizing Color Splitting Filters used for Projection Display System" by W. Chen et al., Displays, Elsevier, 2005, the complete text of which is incorporated herein by reference. The Philips prisms used by Chen have coatings designed with standard techniques of optical thin film design so that polarization splitting is reduced to near zero for all wavelengths of operation.

Polarization-preserving front-projection screens are commercially available with matte metallic coatings that diffusely reflect light while maintaining the polarization state with low depolarization. These screens are commonly used with polarization-based stereoscopic projection systems. Polarization-preserving rear projection screens are also available for use in rear projection systems.

Instead of using a projector that is polarization preserving, a projector that makes a known change in polarization states may be used as long as optical elements are included that perform compensating polarization adjustments after the light passes through the projector or internally in the projector so that the left and right eye images are still orthogonal. ColorLink filters may be helpful compensation elements for this purpose because they may be designed to change the polarization of different colors by different amounts. For example, if the polarization state of a specific color is rotated because of polarization splitting in the Philips prism, the polarization of that color can be corrected by rotating that color back to the desired polarization state by adding a ColorLink filter at the output of the projector.

An advantage of using a polarized-laser light source with a polarization-preserving projector is the high efficiency compared to systems that start with an unpolarized light source. With DMD light valves, typical polarized projection systems lose at least 50% of the light when using an unpolarized light source. Even with polarization recovery, 20% of the light is generally lost when converting from unpolarized to polarized light.

As opposed to SLM-based projectors, scanning projectors do not use an SLM. Instead they have a spot or line of light that is scanned over the area of the screen to form an image. Scanning projectors are typically based on laser light sources because the high collimation of the laser beam allows the projector to form a small spot at a distance. When compared to scanning projectors, SLM-based projectors typically have advantages in construction simplicity, alignment stability, and safety due to lower peak beam intensity.

Other implementations are also within the scope of the following claims.

## Claims

1. A stereoscopic display system comprising:
a polarization-switching light source **characterized by** a polarization state; and
a polarization-preserving projector which is illuminated by the polarization-switching light source.

2. The system of claim 1 wherein the polarization-preserving projector forms a left-eye digital image and a right-eye digital image, and the polarization state is changed in synchronization with an alternating projection of the left-eye digital image and the right-eye digital image.

3. The system of claim 2 wherein an alternating projection of the left-eye digital image and the right-eye digital image forms a moving image.

4. The system of claim 2 wherein the polarization state of the left-eye digital image is orthogonal to the polarization state of the right-eye digital image.

5. The system of claim 4 wherein the polarization state of the left-eye digital image is a circular polarization state.

6. The system of claim 1 further comprising:
a polarization-preserving spatial light modulator in the projector.

7. The system of claim 6 wherein the polarization-preserving spatial light modulator is a digital micromirror device.

8. The system of claim 1 further comprising
a Philips prism in the projector.

9. The system of claim 8 wherein the Philips prism comprises a color-splitting filter with low polarization splitting.

10. The system of claim 1 wherein the polarization-switching light source comprises a laser.

11. The system of claim 1 wherein the polarization-switching light source comprises a rotating disk that switches the polarization state.

12. The system of claim 11 wherein the rotating disk comprises a wave plate.

13. The system of claim 1 wherein the polarization-switching light source comprises an electro-optical device that switches the polarization state.

14. The system of claim 1 wherein the polarization-preserving projector consists of polarization-preserving components.

15. The system of claim 1 further comprising:
a polarization-preserving screen.
